# EUROPÄISCHE PATENTANMELDUNG

(11) **EP 3 709 160 A1**
(43) Veröffentlichungstag der Anmeldung: **16.09.2020**
(21) Anmeldenummer: 20159542.8
(22) Anmeldetag: 26.02.2020
(51) Int. Cl.: G06F 9/4401, G06F 9/455

(54) **FAHRZEUGSYSTEM, FAHRZEUG UND VERFAHREN ZUM BETREIBEN EINES SOLCHEN FAHRZEUGSYSTEMS**

(30) Priorität: 13.03.2019 DE 102019203377
(71) Anmelder: Continental Automotive GmbH, 30165 Hannover (DE)
(72) Erfinder: Goldmann, Andreas - c/o Continental Automotive GmbH, 65824 Schwalbach a. Ts. (DE); Ehrhardt, Steffen - c/o Continental Automotive GmbH, 65824 Schwalbach a. Ts. (DE)

(57) **Zusammenfassung**

Die Erfindung betrifft ein Fahrzeugsystem (1,10) umfassend:
eine Hardwareebene (2),
ein erstes Betriebssystem (3),
eine virtuelle Maschine mit einem zweiten Betriebssystem (6), wobei die virtuelle Maschine auf der Hardwareebene (2) integriert ist,
einen Hypervisor (5,12), der dazu ausgebildet ist, die virtuelle Maschine auf der Hardwareebene (2) zu betreiben, so dass das erste Betriebssystem (4) und das zweite Betriebssystem (6) parallel auf der Hardwareebene (2) betreibbar sind, wobei
auf dem ersten Betriebssystem (3) zumindest eine erste Anwendung (4) und auf dem zweiten Betriebssystem (6) zumindest eine zweite Anwendung (7) ausführbar sind,
wobei die zumindest eine erste Anwendung (4) einen höheren Sicherheitsstandard als die zumindest eine zweite Anwendung (7) aufweist,
wobei das zweite Betriebssystem (6) dazu konfiguriert ist, im Suspend-to-RAM-Betrieb betrieben zu werden, während das erste Betriebssystem (3) ausgeschaltet ist.

Ferner betrifft die Erfindung ein Fahrzeug, ein Verfahren zum Betreiben eines solchen Fahrzeugsystems und ein Computerprogramm.

## Beschreibung

Die Erfindung betrifft ein Fahrzeugsystem umfassend eine Hardwareebene, ein erstes Betriebssystem, eine virtuelle Maschine mit einem zweiten Betriebssystem, wobei die virtuelle Maschine auf der Hardwareebene integriert ist, und einen Hypervisor, der dazu ausgebildet ist, die virtuelle Maschine auf der Hardwareebene zu betreiben, so dass das erste Betriebssystem und das zweite Betriebssystem parallel auf der Hardwareebene betreibbar sind. Ferner betrifft die Erfindung ein Fahrzeug, ein Verfahren zum Betreiben eines solchen Fahrzeugsystems und ein Computerprogramm.

Viele Fahrzeug enthalten Fahrzeugsysteme, welches es ihnen ermöglicht, eine Vielzahl von unterschiedlichen Anwendungen wie beispielsweise eine Infotainmentsystem-Funktion, wie Audio oder eine Navigationsfunktion zu betreiben. Zur Steuerung der Fahrzeugsysteme operiert eine CPU mit einem Standardbetriebssystem, wie beispielsweise mit einem Linux-Betriebssystem.

Wenn das Fahrzeugsystem gestartet wird, ist eine relativ lange Zeit für die CPU erforderlich, um beispielsweise das Linux-Betriebssystem zu starten. Daher muss ein Benutzer lange warten, bevor ein gewünschtes Instrument seine Inbetriebnahmeverarbeitung nach Starten des Fahrzeugs abschließt und das Fahrzeugsystem einsatzbereit ist. Dadurch wird verhindert, dass ein Benutzer beispielsweise sofort eine Funktion einer Rückfahrkamera oder eine andere wichtige Anwendung im Fahrzeug verwenden kann. Durch das Versetzen des gesamten Fahrzeugsystems in den Suspend-to-Ram-Betrieb kann ein schnellerer Startvorgang erzielt werden. Allerdings ist eine sichere Betriebsweise hierdurch nicht gewährleistet.

Die DE 102014215410 A1 offenbart ein Fahrzeugsystem eines Fahrzeugs, das Fahrzeugsystem umfassend: ein Bordrechnersystem mit einem ersten Prozessor und einem zweiten Prozessor, wobei der erste Prozessor ein Betriebssystem ausführt und der zweite Prozessor mit einem Fahrzeugsteuersystem verbunden ist; einen computerlesbaren Speicher, der Anweisungen speichert, die von dem ersten Prozessor ausführbar sind, um: das Bordrechnersystem in einem Suspend-Modus mit flüchtigem Speicher auf Standby zu betreiben, während das Fahrzeug abgeschaltet ist; festzustellen, ob ein Neustart vor einem ausgewählten Ereignis absolvierbar ist; und wenn festgestellt wird, dass ein Neustart vor dem ausgewählten Ereignis absolvierbar ist, Durchführen eines Neustarts des Bordrechnersystems.

Die DE 112016001377 T5 offenbart ein Fahrzeugbordsystem mit einer primären CPU, die in einem Fahrzeug angebracht ist und mit einem Allzweckbetriebssystem operiert; und einem von der primären CPU gesteuerten Peripheriegerät, wobei das Fahrzeugbordsystem ferner aufweist: eine sekundäre CPU, die mit einem Echtzeit-Betriebssystem operiert, wobei die sekundäre CPU bei Inbetriebnahme eine Initialisierungsverarbeitung auf dem Peripheriegerät durchführt und dann der primären CPU die Steuerung des Peripheriegeräts zuteilt.

Die DE 102014224485 A1 offenbart ein Bordnetz für ein Fahrzeug umfassend eine Stromquelle und mindestens eine Abtast-Steuereinrichtung, die eingerichtet ist, Zustandssignale von mindestens einer weiteren Steuereinrichtung und/oder mindestens einer Schalteinheit mit einer vorgegebenen Zykluszeit getaktet abzutasten, wobei das Bordnetz derart eingerichtet ist, dass es von einem ersten Betriebszustand, dem so genannten Normal-Betriebszustand, in einem zweiten Betriebszustand, dem so genannten Standby-Betriebszustand schaltbar ist, in dem es weniger Energie verbraucht als im Normal-Betriebszustand und weiterhin eingerichtet ist, im Normal-Betriebszustand Zustandssignale mit einer kürzeren Zykluszeit zu erfassen als im Standby-Betriebszustand, wobei die Abtast-Steuereinrichtung derart eingerichtet ist, dass im Standby-Betriebszustand mittels eines vorgegebenen Wechselparameters automatisch die Zykluszeit von einer ersten Standby-Zykluszeit zu einer zweiten Standby-Zykluszeit verändert wird.

Die DE 102012205301 A1 offenbart eine Rechner-Architektur zur Steuerung einer elektronischen Datenverarbeitung in einem Fahrzeug, umfassend: eine Recheneinrichtung zur Ausführung der elektronischen Datenverarbeitung, mindestens zwei virtuelle Maschinen, wobei eine erste der virtuellen Maschinen ein erstes Betriebssystem und eine zweite der virtuellen Maschinen ein zweites Betriebssystem umfasst, eine Virtualisierungsschicht, die dazu ausgebildet ist, dass das erste und zweite Betriebssystem auf der Recheneinrichtung parallel betreibbar sind, wobei das zweite Betriebssystem einer höheren Sicherheitsanforderung als das erste Betriebssystem genügt.

Ausgehend vom Stand der Technik ist es eine Aufgabe dieser Erfindung ein Fahrzeugsystem, ein Fahrzeug und ein Verfahren anzugeben, welches hinsichtlich der Wartezeit für Einsatzbereitschaft und sicherer Betriebsweise verbessert ist.

Diese Aufgabe wird durch die Angabe eines Fahrzeugsystems mit den Merkmalen des Anspruchs 1 sowie die Angabe eines Fahrzeugs mit den Merkmalen des Anspruchs 14 gelöst. Ferner wird die Aufgabe gelöst durch die Angabe eines Verfahrens zum Betreiben eines Fahrzeugsystems mit den Merkmalen des Anspruchs 16. Zudem wird die Aufgabe gelöst durch die Angabe eines Computerprogramms mit den Merkmalen des Anspruchs 21.

In den Unteransprüchen sind weitere vorteilhafte Maßnahmen aufgelistet, die beliebig miteinander kombiniert werden können, um weitere Vorteile zu erzielen.

Die Aufgabe wird gelöst durch die Angabe eines Fahrzeugsystems umfassend:
eine Hardwareebene, und
ein erstes Betriebssystem, und
eine virtuelle Maschine mit einem zweiten Betriebssystem, wobei die virtuelle Maschine auf der Hardwareebene integriert ist, und
einen Hypervisor, der dazu ausgebildet ist, die virtuelle Maschine auf der Hardwareebene zu betreiben, so dass das erste Betriebssystem und das zweite Betriebssystem parallel auf der Hardwareebene betreibbar sind,
wobei auf dem ersten Betriebssystem zumindest eine erste Anwendung und auf dem zweiten Betriebssystem zumindest eine zweite Anwendung ausführbar sind, und wobei die zumindest eine erste Anwendung einen höheren Sicherheitsstandard als die zumindest eine zweite Anwendung aufweist,
wobei das zweite Betriebssystem dazu konfiguriert ist, im Suspend-to-RAM-Betrieb betrieben zu werden, während das erste Betriebssystem ausgeschaltet ist.

Die Hardwareebene wird oft auch als Rechensystem oder Recheneinheit bezeichnet und beinhaltet vorzugsweise einen Prozessor, einen Arbeitsspeicher sowie eine Schnittstelle.

Dabei ist der Hypervisor als abstrahierende Schicht zwischen der Hardwareebene, auf dem die virtuelle Maschine ausgeführt wird, und der virtuellen Maschine ausgebildet. Die Implementierung erfolgt rein hardwarebasiert, rein softwarebasiert oder durch eine Kombination aus beidem. Der Hypervisor ist insbesondere dazu ausgebildet, virtuelle Maschinen bereitzustellen und zu verwalten. Die virtuelle Maschine bildet bevorzugt die Rechnerarchitektur eines real in Hardware existierenden oder hypothetischen Rechners nach. Das Betriebssystem der virtuellen Maschine wird häufig auch als Gastbetriebssystem bezeichnet. Der Hypervisor erlaubt in der Regel den Betrieb mehrerer virtueller Maschinen gleichzeitig auf einem physischen Rechnersystem. Der Hypervisor kann auch als Virtualisierungsschicht bezeichnet werden.

Der Hypervisor kann als Typ-0, Typ-1 oder Typ-2 Hypervisor ausgebildet sein, und neben der ersten virtuellen Maschine beispielsweise weitere virtuelle Maschinen bereitstellen.

Ein Typ-1 Hypervisor ist direkt auf der Hardwareebene integriert und benötigt kein vollwertiges Betriebssystem. Die virtuellen Maschinen sowie deren Zuteilung der Betriebsmittel, auch häufig als Ressourcen bezeichnet, beispielsweise Arbeitsspeicher, CPU, werden dynamisch von einem minimalen Betriebssystem oder gar keinem Betriebssystem unterstützt. Vertreter des Typ-1 Hypervisors sind u.a. Microsoft Hyper-V oder der Citrix XenServer, oder für eingebettete Systeme Sysgos PikeOS, Green Hills Integrity, Freescales Topaz.

Der Hypervisor ist so konfiguriert, dass die virtuellen Maschinen gleichzeitig auf der Hardwareebene ausgeführt werden können.

Der Typ-2 Hypervisor wird innerhalb eines vollwertigen Hauptbetriebssystems integriert, welches die letztliche Zuteilung der Betriebsmittel übernimmt, die von der virtuellen Maschine angefragt werden. Der Typ-2 Hypervisor kontrolliert von dort ausgehend die virtuellen Maschinen. Bekannte Vertreter sind VMware Workstation, VirtualBox oder Linux Kernel-based Virtual Machine (KVM).

Ein Typ-0 Hypervisor wird ohne unterstützendes Betriebssystem direkt auf der Hardwareebene integriert.

Sicherheitsrelevante erste Funktionen bzw. Anwendungen mit hohem Sicherheitsstandard sind beispielsweise Instrument Cluster Anwendungen, beispielsweise Überwachungs- und Steuerungsfunktionen im Fahrzeug. Unkritische zweite Anwendungen, das heißt Anwendungen mit niedrigerem Sicherheitsstandard sind beispielsweise durch Infotainmentsystem-Anwendungen gegeben. Infotainmentsystem-Anwendungen betreffen dabei Funktionen eines Infotainmentsystems. Ein Infotainmentsystem umfasst beispielsweise Autoradio bzw. Multimedia-System, Navigationssystem und Freisprecheinrichtung.

Solche Infotainmentsysteme weisen üblicherweise eine NAND-Speichereinheit auf, die einen komplexen Aufstartvorgang erfordern.

Eine Einteilung in Anwendungen mit hohen bzw. niedrigem Sicherheitsstandard kann beispielsweise mithilfe der ISO 26262 ("Road vehicles - Functional safety") ISO-Norm für sicherheitsrelevante elektrische/elektronische Systeme in Kraftfahrzeugen getroffen werden.

Erfindungsgemäß wurde erkannt, dass das Anwenden vom Suspend-to-RAM-Betrieb auf das gesamte Fahrzeugsystem gefährlich ist, weil die Wahrscheinlichkeit von einem Fehlstart oder einem undefinierten Start sehr hoch ist. Der permanent eingeschaltete Zustand der Hardware der Hardwareebene, beispielsweise des Speichers, und der Betriebssysteme sorgt dafür, dass Memory Leaks und Speicherfragmentierung das Verhalten des Fahrzeugsystems nicht deterministisch beeinflussen können.

Anstelle das gesamte Fahrzeugsystem in den Suspend-to-RAM-Betrieb zu versetzen, wird das System so partitioniert, dass das zweite Betriebssystem dazu konfiguriert ist, im Suspend-to-RAM-Betrieb betrieben zu werden, während das erste Betriebssystem ausgeschaltet ist, wobei auf dem ersten Betriebssystem zumindest eine erste Anwendung und auf dem zweiten Betriebssystem zumindest eine zweite Anwendung ausführbar sind,
und wobei die zumindest eine erste Anwendung einen höheren Sicherheitsstandard als die zumindest eine zweite Anwendung aufweist.

Das heißt, es wird nur der unkritische Teil des Systems in den Suspend-to-RAM-Betrieb versetzt wird. Das kritische Teil des Systems wird neu gestartet, wodurch ein sicheres Aufstarten und ein sicherer Betrieb gewährleistet ist.

Dadurch wird vor allem Robustheit und schnelle Verfügbarkeit des Betriebssystems auf dem die sicherheitskritischen Anwendungen laufen, gewährleistet, während das nicht sicherheitskritische Betriebssystem mit den unkritischen Anwendungen durch den Suspend-to-RAM-Betrieb schnell verfügbar ist. Dadurch wird zum einen eine schnelle Verfügbarkeit des Fahrzeugsystems und zum anderen ein sicherer Betrieb des Fahrzeugsystems gewährleistet.

Der Stromverbrauch des Fahrzeugsystems wird minimiert.

Vorzugsweise weist das erste Betriebssystem einen höheren Sicherheitsstandard als das zweite Betriebssystem auf. Das erste Betriebssystem kann daher als ein zertifizierbares, echtzeitfähiges schnell bootendes erstes Betriebssystem für sicherheitskritische Funktionen/Anwendungen ausgestaltet sein. Das erstes Betriebssystem kann beispielsweise als AUTOSAR (AUTomotive Open System ARchitecture)-Betriebssystem ausgestaltet sein. Dabei ist AUTOSAR eine Softwarearchitektur für elektronische Steuergeräte. Ferner kann das erste Betriebssystem beispielsweise als PikeOS ausgebildet ein. Dieses ist ein Echtzeit-Betriebssystem, das einen auf einem Separation-Kernel basierenden Hypervisor mit mehreren Partitionstypen für viele andere Betriebssysteme bietet. Das PikeOS-Echtzeit-Betriebssystem wurde für sicherheitskritische Anwendungen mit Zertifizierungsanforderungen gestaltet. Ein weiteres Beispiel für ein solches Betriebssystem ist das QNX, welches ein proprietäres POSIX-fähiges unixoides Echtzeitbetriebssystem darstellt.

Das zweite Betriebssystem für unkritische Funktionen/Anwendungen ist beispielsweise als ein High Level OS (Operation System) ausgebildet. Das zweite Betriebssystem kann beispielsweise ein Linux-, Genivi-, Windows-, oder Android-Betriebssystem sein.

Vorzugsweise ist bei Inbetriebnahme des Fahrzeugsystems ein Neustart des ersten Betriebssystems und ein Aufstart des zweiten Betriebssystems aus dem Suspend-to-RAM-Betrieb bewerkstelligbar.

Bevorzugt umfasst das Fahrzeugsystem die zumindest eine erste Anwendung und die zumindest eine zweite Anwendung, wobei die zumindest eine erste Anwendung ausgeschaltet ist, während die zumindest zweite Anwendung im Suspend-to-RAM-Betrieb ist.

Vorzugsweise ist somit bei Inbetriebnahme des Fahrzeugsystems ein Neustart der zumindest einen ersten Anwendung und ein Aufstart der zumindest einen zweiten Anwendung aus dem Suspend-to-RAM-Betrieb bewerkstelligbar. Dadurch wird die sichere Ausführung der sicherheitskritischen ersten Anwendung/Anwendungen und eine schnelle Ausführung der unkritischen zweiten Anwendung/Anwendungen bewerkstelligt.

In bevorzugter Ausgestaltung ist der Hypervisor dazu konfiguriert bei Außerbetriebnahme des Fahrzeugsystems abgeschaltet zu werden und bei Inbetriebnahme des Fahrzeugsystems neu gestartet zu werden. Dadurch kann eine sichere Betriebsweise des Hypervisors gewährleistet werden.

Vorzugsweise ist die Hardwareebene als ein System-on-Chip (SoC) ausgebildet. Bevorzugt umfasst das System-on-Chip zumindest einen Mikroprozessor, einen Arbeitsspeicher, eine Schnittstelle und einen Bus. Unter einem Ein-Chip-System, (System-on-Chip), versteht man im Wesentlichen die Integration aller oder eines großen Teils der Funktionen eines programmierbaren elektronischen Systems auf einem Chip, also einem integrierten Schaltkreis auf einem Halbleiter-Substrat, auch monolithische Integration genannt.

Bevorzugt weist die Hardwareebene Betriebsmittel auf, wobei der Hypervisor dazu konfiguriert ist, die Betriebsmittel auf das erste Betriebssystem und zweite Betriebssystem derart aufzuteilen, dass das erste Betriebssystem und zweite Betriebssystem unabhängig voneinander betreibbar sind. Vorzugsweise ist der Hypervisor dazu konfiguriert, eine Partitionierung von zumindest einem der Betriebsmittel zu bewerkstelligen, indem der Hypervisor einen ersten Teilbereich des zumindest einen Betriebsmittels dem ersten Betriebssystem und einen zweiten Teilbereich des zumindest einen Betriebsmittels dem zweiten Betriebssystem zuweist. Weiterhin bevorzugt ist der Hypervisor dazu konfiguriert, die zumindest eine erste Anwendung und die zumindest eine zweite Anwendung in einer ersten und zweiten Betriebssystem-Partition auf der Hardwareebene bereitzustellen. Dadurch können die beiden Betriebssysteme auf derselben Hardware betrieben werden. Somit können die sicherheitskritischen und unkritischen Anwendungen dieselbe Hardware nutzen.

Bevorzugt umfasst das Fahrzeugsystem eine erste virtuelle Maschine mit dem
ersten Betriebssystem und
eine zweite virtuelle Maschine mit dem zweiten Betriebssystem, wobei die erste virtuelle Maschine und die zweite virtuelle Maschine auf der Hardwareebene integriert sind, so dass die erste virtuelle Maschine und die zweite virtuelle Maschine parallel auf der Hardwareebene betreibbar sind,
wobei auf dem ersten Betriebssystem zumindest die eine erste Anwendung und auf dem zweiten Betriebssystem zumindest die eine zweite Anwendung ausführbar sind, wobei die zumindest eine erste Anwendung einen höheren Sicherheitsstandard als die zumindest eine zweite Anwendung aufweist,
einen Hypervisor, der dazu ausgebildet ist, die erste virtuelle Maschine und die zweite virtuelle Maschine auf der Hardwareebene zu betreiben,
wobei die zweite virtuelle Maschine dazu ausgebildet ist, im
Suspend-to-RAM-Betrieb betrieben zu werden, während die erste virtuelle Maschine ausgeschaltet ist.
Hierbei kommt vor allem ein TYP-1 oder TYP-0 Hypervisor zum Einsatz. Somit ist eine effiziente Nutzung von Multicore-Prozessoren möglich. Die Multicorekerne können den verschiedenen virtuellen Maschinen zugeordnet werden.

Vorzugsweise umfasst die Hardwareebene zumindest ein Betriebsmittel, wobei der Hypervisor dazu konfiguriert ist, eine Partitionierung von zumindest einem der Betriebsmittel zu bewerkstelligen, indem der Hypervisor einen ersten Teilbereich des zumindest einen Betriebsmittels der ersten virtuellen Maschine und einen zweiten Teilbereich des zumindest einen Betriebsmittels der zweiten virtuellen Maschine zuweist. Dadurch können beide virtuelle Maschinen vereinfacht parallel nebeneinander betrieben werden.

In einer weiteren bevorzugten Ausgestaltung ist bei Inbetriebnahme des Fahrzeugsystems ein Neustart des ersten Betriebssystems der ersten virtuellen Maschine und ein Aufstart des zweiten Betriebssystems der zweiten virtuellen Maschine aus dem Suspend-to-RAM-Betrieb bewerkstelligbar.

Ferner wird die Aufgabe gelöst durch die Angabe eines Fahrzeugs, welches ein wie oben beschriebenes Fahrzeugsystem aufweist. In einer bevorzugten Ausgestaltung weist das Fahrzeugsystem zumindest eine Komponente auf, wobei das Fahrzeugsystem eine Schnittstelle zur Kommunikation des Fahrzeugsystems mit der zumindest einen Komponente aufweist. Diese Komponente kann beispielsweise ein Infotainmentsystem oder eine Fahrerkamera sein.

Ferner wird die Aufgabe gelöst durch die Angabe eines Verfahrens zum Betreiben eines Fahrzeugsystems umfassend der Schritte:
- Bereitstellen eines ersten Betriebssystems auf einer Hardwareebene,
- Bereitstellen eines Hypervisors auf der Hardwareebene,
- Bereitstellen einer virtuellen Maschine mit einem zweiten Betriebssystem durch den Hypervisor, so dass das erste Betriebssystem und das zweite Betriebssystem parallel auf der Hardwareebene betreibbar sind, wobei auf dem ersten Betriebssystem zumindest eine erste Anwendung und auf dem zweiten Betriebssystem zumindest eine zweite Anwendung ausführbar ist, wobei die zumindest eine erste Anwendung einen höheren Sicherheitsstandard als die zumindest eine zweite Anwendung aufweist,
- Betreiben des zweiten Betriebssystems im Suspend-to-RAM-Betrieb, während das erste Betriebssystem ausgeschaltet ist.

Die Vorteile des Fahrzeugsystems können auch auf das Verfahren übertragen werden.

Vorzugsweise umfasst das Verfahren die Schritte:
- Bereitstellen eines Hypervisors auf der Hardwareebene,
- Bereitstellen einer ersten virtuellen Maschine mit dem ersten Betriebssystem durch den Hypervisor,
- Bereitstellen einer zweiten virtuellen Maschine mit dem zweiten Betriebssystem durch den Hypervisor, so dass die erste virtuelle Maschine und die zweite virtuelle Maschine parallel auf der Hardwareebene betreibbar sind, wobei auf dem ersten Betriebssystem zumindest die eine erste Anwendung und auf dem zweiten Betriebssystem zumindest die eine zweite Anwendung ausführbar sind, wobei die zumindest eine erste Anwendung einen höheren Sicherheitsstandard als die zumindest eine zweite Anwendung aufweist,
- Betreiben der zweiten virtuellen Maschine im Suspend-to-RAM-Betrieb, während die erste virtuelle Maschine ausgeschaltet ist.

Vorzugsweise umfasst das Verfahren die weiteren Schritte:
- Bereitstellen eines Fahrzeugsystems im Betrieb,
- Versetzten des zweiten Betriebssystems in den Suspend-to-RAM-Betrieb und Herunterfahren des ersten Betriebssystems.
Vorzugsweise umfasst das Verfahren die weiteren Schritte:
- Bereitstellen eines Fahrzeugsystems im Betrieb,
- Versetzten des zweiten Betriebssystems in den Suspend-to-RAM-Betrieb und Herunterfahren des ersten Betriebssystems
- Herunterfahren und ausschalten des Hypervisors.

In weiterer bevorzugter Ausgestaltung umfasst das Verfahren die weiteren Schritte:
- Bereitstellen des ersten Betriebssystems im ausgeschalteten Zustand,
- Bereitstellen des zweiten Betriebssystems im Suspend-to-RAM-Betrieb,
- Starten des ersten Betriebssystems durch einen Neustart bei Inbetriebnahme des Fahrzeugsystems,
- Starten des zweiten Betriebssystems aus dem Suspend-to-RAM-Betrieb bei Inbetriebnahme des Fahrzeugsystems.

In weiterer bevorzugter Ausgestaltung umfasst das Verfahren die weiteren Schritte:
- Bereitstellen eines Fahrzeugsystems im Betrieb,
- Herunterfahren der zumindest einen ersten Anwendung und versetzten der zumindest einen zweiten Anwendung in den Suspend-to-RAM-Betrieb.

Bevorzugt wird ein Partitionieren von zumindest einem Betriebsmittel der Hardwareebene durch Zuweisen eines ersten Teilbereichs des zumindest einen Betriebsmittels zu dem ersten Betriebssystem und eines zweiten Teilbereichs des zumindest einen Betriebsmittels zu dem zweiten Betriebssystem durch den Hypervisor vorgenommen.

Vorzugsweise ist das Verfahren dazu ausbildet, auf einem wie oben beschriebenen Fahrzeugsystem durchgeführt zu werden.

Ferner wird die Aufgabe gelöst durch die Angabe eines Computerprogramms umfassend Befehle, die bewirken, dass das wie oben beschriebene Fahrzeugsystem, die wie oben beschriebenen Verfahrensschritte ausführt. Somit kann das Verfahren auch nachträglich vereinfacht in dafür geeignete Fahrzeuge installiert werden.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- FIG 1:: ein erstes Fahrzeugsystem gemäß dem Stand der Technik,
- FIG 2:: ein zweites Fahrzeugsystem gemäß dem Stand der Technik,
- FIG 3:: ein drittes Fahrzeugsystem gemäß dem Stand der Technik,
- FIG 4:: ein Aufstartverfahren gemäß dem Stand der Technik,
- FIG 5:: ein erstes erfindungsgemäßes Fahrzeugsystem,
- FIG 6:: ein zweites erfindungsgemäßes Fahrzeugsystem,
- FIG 7:: ein erfindungsgemäßes Aufstartverfahren.

Obwohl die Erfindung im Detail durch die bevorzugten Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

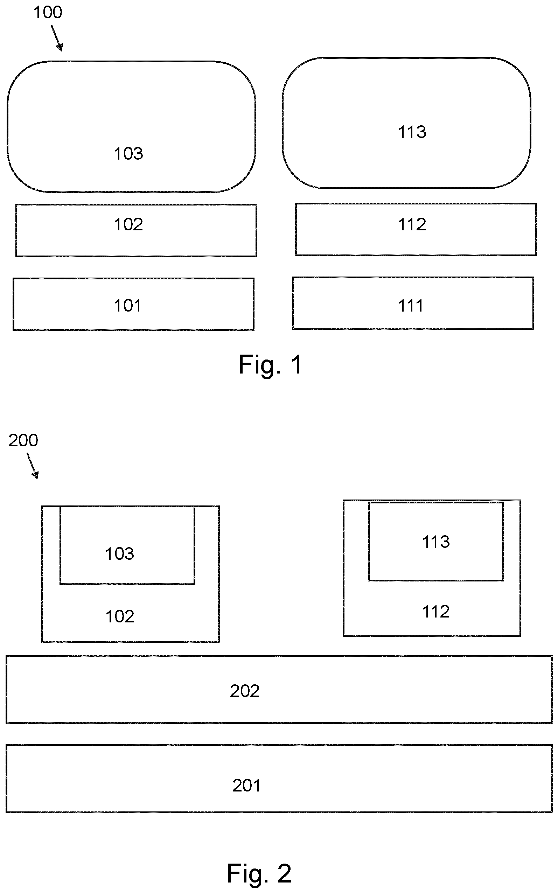

FIG 1 zeigt ein Fahrzeugsystem 100 gemäß dem Stand der Technik. Das Fahrzeugsystem 100, das in einem Fahrzeug Anwendung findet, umfasst eine erste Hardwareebene 101, welche ein erstes Betriebssystem 102 aufweist. Das erste Betriebssystem 102 ist für erste sicherheitskritische Funktionen/Anwendungen 103, das heißt, für Anwendungen mit hohem Sicherheitsstandard im Fahrzeug, ausgestaltet.

Ferner umfasst das Fahrzeugsystem 100 eine zweite Hardwareebene 111 mit einem zweiten Betriebssystem 112. Das zweite Betriebssystem 112 ist für zweite unkritische Funktionen/Anwendungen 113, das heißt, für Anwendungen mit niedrigem Sicherheitsstandard im Fahrzeug, ausgestaltet.

Jede der Hardwareebenen 101,111 umfasst dabei bevorzugt zumindest einen Mikroprozessor, ein Bios, einen Arbeitsspeicher (RAM) und/oder einen Flash-Speicher, einen Taktgeber sowie verschiedene Schnittstellen und mehrere Busse.

Ferner können die Hardwareebenen 101, 111 eine Aufstart -Speichereinheit bzw. einen Boot-ROM-Speicher, z. B. als Flash- oder OTP-Speicher, aufweisen, in der für den Aufstartvorgang zuständige Programmelemente gespeichert sind.

Die Hardwareebenen 101,111 sind voneinander physikalisch separiert, beispielsweise sind diese auf unterschiedlichen integrierten Schaltungen.

Dabei ist das erste Betriebssystem 102 für sicherheitskritische Funktionen bzw. sicherheitskritische Anwendungen 103 und das zweite Betriebssystem 112 für unkritische Funktionen bzw. unkritische Anwendungen 113 ausgestaltet.

Die zweite Hardwareebene 111 weist als ein zweites Betriebssystem 112 für unkritische Funktionen/Anwendungen 113 ein High Level OS (Operation System) auf. Das zweite Betriebssystem 112 kann beispielsweise Linux, Genivi, Windows oder Android sein. Unkritische Funktionen sind beispielsweise durch das Fahrzeug-Infotainmentsystem gegeben. Das Fahrzeug-Infotainmentsystem kann dabei Funktionen für Autoradio bzw. Multimedia-Systeme, Navigationssystem und/oder Freisprecheinrichtung aufweisen.

Solche Fahrzeug-Infotainmentsysteme weisen üblicherweise eine NAND-Speichereinheit auf, die einen komplexen Aufstartvorgang erfordern.

Das erste Hardwareebene 101 weist als erstes Betriebssystem 102 ein zertifizierbares, echtzeitfähiges schnell bootendes erstes Betriebssystem 102 für sicherheitskritische Funktionen/Anwendung 103 auf.

Die Betriebssysteme 102, 112 und deren Anwendungen 103, 113 werden somit unabhängig voneinander ausgeführt, das heißt, die Betriebssysteme 102, 112 werden unabhängig voneinander betrieben sowie außer Betrieb gesetzt.

Das Aufstarten des Fahrzeugsystems 100 wird wie folgt durchgeführt:
Es wird das gesamte Fahrzeugsystem 100, also alle beiden Betriebssysteme 102,112 neu gestartet und initialisiert. Die Startup-Performance wird für alle unabhängigen Betriebssysteme 102,112 optimiert.

FIG 2 zeigt ein weiteres Beispiel eines Fahrzeugsystems 200 gemäß dem Stand der Technik. Das Fahrzeugsystem 200 weist eine Hardwareebene 201 mit einem daraufgesetzten Hypervisor (Virtualisierungsschicht) 202 auf, welcher zumindest zwei virtuelle Maschinen auf der Hardwareebene 201 installiert. Dabei umfasst die erste virtuelle Maschine das erstes Betriebssystem 102 für die sicherheitskritischen ersten Anwendungen 103. Das erste Betriebssystem 102 kann wie oben beschrieben als ein zertifizierbares, echtzeitfähiges schnell bootendes erstes Betriebssystem 102 ausgestaltet sein. Das erste Betriebssystem 102 kann beispielsweise AUTOSAR (AUTomotive Open System ARchitecture) sein. Dabei ist AUTOSAR eine Softwarearchitektur für elektronische Steuergeräte. Alternativ kann das erste Betriebssystem 102 als PikeOS ausgebildet ein. Dieses ist ein Echtzeit-Betriebssystem. Das PikeOS-Echtzeit-Betriebssystem wurde für sicherheitskritische erste Anwendungen 103 mit Zertifizierungsanforderungen geschaffen. Weiterhin kann die erste virtuelle Maschine einen Ein-/Ausgangstreiber und sowie einen Echzeitscheduler umfassen. Ferner sind auf der ersten virtuellen Maschine die sicherheitskritischen ersten Anwendungen 103 ausführbar. Dies können beispielsweise Instrument Cluster Applikationen mit höheren Sicherheitsstandards sein.

Die zweite virtuelle Maschine weist das zweites Betriebssystem 112, wie beispielsweise ein High Level OS (Operation System), insbesondere wie beispielsweise Linux, Genivi, Windows oder Android, für die unkritischen zweiten Anwendungen 113 auf. Weiterhin kann die zweite virtuelle Maschine ebenfalls einen Ein-/Ausgangstreiber und sowie einen Scheduler umfassen. Unkritische zweite Anwendungen 113 können beispielsweise Infotainment Anwendungen mit niedrigen Sicherheitsstandards sein. Durch den Hypervisor 202 können die virtuellen Maschinen und damit die zwei Betriebssysteme 102, 112 sowohl untereinander als auch von der Hardwareebene 201 des Fahrzeugsystems 200 entkoppelt werden. Hierzu wird ein Typ-1 oder Typ-0 Hypervisor verwendet.

Beim Ausschalten des Fahrzeugs wird das gesamte Fahrzeugsystem 200 in den Suspend-to-RAM-Betrieb (STR) in den RAM (Datenspeicher) gebracht. Dieser Suspend-to-RAM-Betrieb wird auch Standby-Betrieb (Standby-Modus, Sleepmodus) genannt. Dadurch wird eine schnelle Verfügbarkeit des Fahrzeugsystems 200 erreicht.

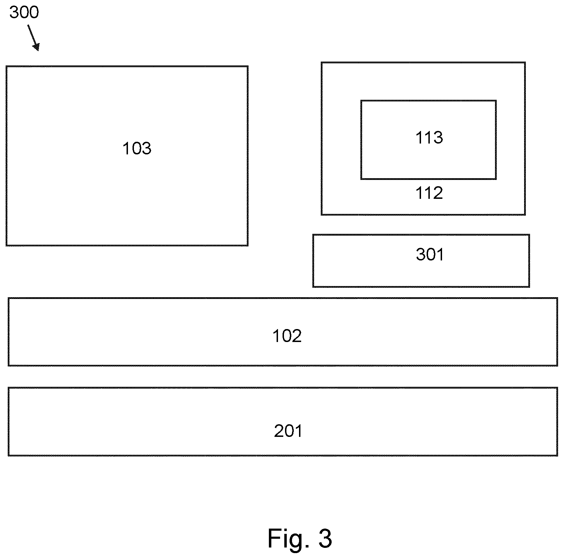

FIG 3 zeigt ein weiteres Fahrzeugsystem 300 gemäß dem Stand der Technik. Hier ist eine Hardwareebene 201, auf welchen das erstes Betriebssystem 102, für die ersten sicherheitskritische Anwendungen 103 direkt integriert ist, vorgesehen. Das erste Betriebssystem 102 kann wie oben beschrieben als ein zertifizierbares, echtzeitfähiges, schnell bootendes erstes Betriebssystem 102 ausgestaltet sein.

Das Fahrzeugsystem 300 enthält einen Hypervisor 301, der so konfiguriert ist, dass eine vom Hypervisor 301 auf der Hardwareebene 201 installierte virtuelle Maschine, welche das zweites Betriebssystem 112 für zweite unkritische Anwendungen 113 aufweist, gleichzeitig auf der Hardwareebene 201 ausgeführt werden kann. Das erste Betriebssystem 102 kann dabei die virtuelle Maschine erstellen, auf der das zweite Betriebssystem 113 gehostet wird. Das erste Betriebssystem 102 kann solche virtuelle Maschine beispielsweise mithilfe einer API

(Anwendungsprogrammschnittstelle) erstellen, z. B. der Hypercall-API. Hierzu wird ein Typ-2 Hypervisor verwendet. Ein solcher Typ-2 Hypervisor wird innerhalb eines vollwertigen Hauptbetriebssystems integriert, welches die letztliche Zuteilung der Betriebsmittel, wie beispielsweise die CPU, übernimmt, die von der virtuellen Maschine angefragt werden. Der Hypervisor kontrolliert von dort ausgehend die virtuelle Maschine. Bekannte Vertreter sind VMware Workstation, VirtualBox oder Linux Kernel-based Virtual Machine (KVM).

Die Fahrzeugsysteme 200, 300 nach dem Stand der Technik laufen somit auf der gleichen Hardwareebene 201 mit einem einzigen Speicher ab. Die Anwendungen werden aber in unterschiedlichen Betriebssystemen ausgeführt: kritische erste Anwendungen 103 auf einem ASIL (Automotive Safety Integrity Level) zertifizierten Operating System (OS), hier dem ersten Betriebssystem 102, und nicht kritische zweite Anwendungen 113 auf einem High Level Operating System (OS), hier dem zweiten Betriebssystem 112, wie zum Beispiel Android/Linux/Windows, wobei die Separierung durch den Hypervisor 202, 301 sichergestellt wird.

Beim Ausschalten des Fahrzeugs wird das gesamte Fahrzeugsystem 200,300, in den Suspend-to-RAM-Betrieb (STR) in den RAM (Datenspeicher) gebracht.

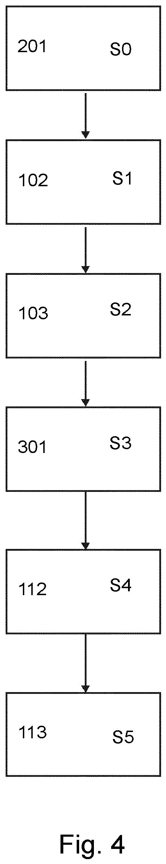

FIG 4 zeigt ein Aufstartverfahren von dem Fahrzeugsystem 300 gemäß dem Stand der Technik.

Alle Betriebssysteme 102,112 und Anwendungen 103,113 als auch der Hypervisor werden aus dem Suspend-to-RAM-Betrieb im RAM geholt.

In einem ersten Schritt S1 wird das erste Betriebssystem 102 auf der Hardware 201, welche unter einem Schritt S0 bereitgestellt wurde, aus dem RAM, wo sie in einem Suspend-to-RAM-Betrieb warten, heraus gestartet. Das erste Betriebssystem 102 kann beispielsweise als AUTOSAR (AUTomotive Open System ARchitecture), PikeOS, QNX Integrity ausgebildet sein.

In einem zweiten Schritt S2 werden auf dem ersten Betriebssystem 102 die sicherheitskritischen Anwendungen 103, welche im RAM in einem Suspend-to-RAM-Betrieb gespeichert sind, heraus gestartet. Anwendungen mit hohem Sicherheitsstandard / Sicherheitsanforderungen sind beispielsweise Instrument-Cluster-Applikationen. Diese werden bevorzugt einem Kombiinstrument zugeordnet.

In einem dritten Schritt S3 wird der Hypervisor 301 aus, welcher im RAM in einem Suspend-to-RAM-Betrieb gespeichert ist, heraus gestartet. Dieser installiert eine virtuelle Maschine auf der Hardwareebene 201. Der Hypervisor 301 ist hier bevorzugt als Typ-2 Hypervisor ausgestaltet, welcher innerhalb des ersten Betriebssystems 102 integriert ist. Er übernimmt die Zuteilung der Betriebsmittel wie CPU, etc. der Hardwareebene 201. Der Hypervisor 301 teilt daher die Betriebsmittel (Ressourcen) für die virtuelle Maschine zu. Er verteilt die Betriebsmittel derart, dass für das zweite Betriebssystem 112 alle Ressourcen bei Bedarf verfügbar sind, so als ob nur ein Betriebssystem vorhanden wäre.

Anschließend wird in einem vierten Schritt S4 auf der Hardwareebene 201 das zweites Betriebssystem 112, ein High Level Betriebssystem wie Linux, Windows, Android, welche in der virtuellen Maschine betrieben werden, durch den Hypervisor 301 gestartet. Das zweite Betriebssystem 112 wird aus dem RAM, wo es in einem Suspend-to-RAM-Betrieb gespeichert ist, gestartet.

Der Hypervisor 301 ist dazu ausgebildet, dass das erste Betriebssystem 103 und das zweite Betriebssystem 112 untereinander entkoppelt und parallel nebeneinander ausgeführt werden. Durch den Hypervisor 301 lassen sich unkritische zweite Anwendungen 113 in einer eigenen Betriebssystem-Partition auf der Hardwareebene 201 integrieren.

In einem fünften Schritt S5 werden die unkritischen zweiten Anwendungen 113, welche im RAM in einem Suspend-to-RAM-Betrieb gespeichert sind, heraus gestartet. Diese können beispielsweise zu den Infotainment-Anwendungen gehören.

Es wird daher das gesamte Fahrzeugsystem 300 zum Aufstarten aus dem systemweiten RAM, wo es in einem Suspend-to-RAM-Betrieb gespeichert ist, gestartet.

Es wurde jedoch erkannt, dass das Anwenden vom Suspend-to-RAM-Betrieb auf sicherheitskritische Anwendungen 103 und dem dazugehörigen Betriebssystem 102 gefährlich ist, weil die Wahrscheinlichkeit von einem Fehlstart oder einem undefinierten Start sehr hoch ist. Ein permanent eingeschaltetes Fahrzeugsystem 300, beispielsweise der permanent eingeschaltete Speicher, sorgt dafür, dass Memory Leaks und Speicherfragmentierung das Verhalten von dem Fahrzeugsystem 300 nicht deterministisch beeinflussen können. Durch das Anwenden des Suspend-to-RAM-Betrieb auf das gesamte Fahrzeugsystem 300 wird die Zuverlässigkeit der kritischen ersten Anwendungen 103 als auch unkritischen zweiten Anwendungen 113 gefährdet.

Es besteht die Gefahr, dass der RAM-Inhalt nach dem Wake-Up, also durch beispielsweise Starten des Fahrzeugs und des Fahrzeugsystems 200, 300 einen Defekt aufweist, wodurch das gesamte Fahrzeugsystem 300 abstürzen kann. Darüber hinaus aggregieren sich die Probleme mit Memory Leaks und Speicherfragmentierung von Aufstart zu Aufstart.

Gleiches gilt für das Fahrzeugsystem 200 gemäß dem Stand der Technik.

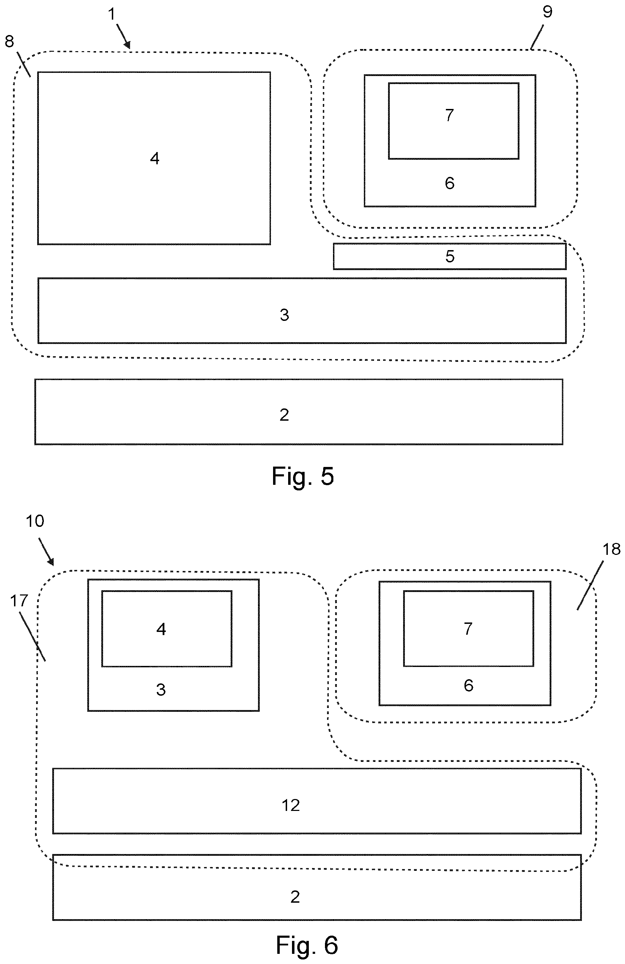

FIG 5 zeigt ein erfindungsgemäßes Fahrzeugsystem 1. Das Fahrzeugsystem 1 umfasst eine Hardwareebene 2, welche bevorzugt zumindest einen Mikroprozessor, einen Arbeitsspeicher (RAM, Main Memory) und einen Flash-Speicher, einen Taktgeber sowie verschiedene Schnittstellen und mehrere Busse umfasst. Ferner umfasst die Hardwareebene 2 ein erstes Betriebssystem 3. Das erste Betriebssystem 3 ist bevorzugt als ein zertifizierbares, echtzeitfähiges schnell bootendes, Automotive Safety Integrity Level (ASIL) erstes Betriebssystem 3 ausgestaltet. Das erste Betriebssystem 3 wird bevorzugt hinsichtlich der ISO-Norm ("Road vehicles - Functional safety") für sicherheitsrelevante elektrische/elektronische Anwendungen in Kraftfahrzeugen ausgewählt. Auf dem ersten Betriebssystem 3 werden bevorzugt sicherheitskritische erste Anwendungen 4 ausgeführt. Diese sind bevorzugt als Instrument-Cluster-Applikationen ausgebildet und werden bevorzugt einem Kombiinstrument zugeordnet.

Ferner umfasst das Fahrzeugsystem 1 einen Hypervisor 5, welcher eine virtuelle Maschine installiert. Der Hypervisor 5 ist bevorzugt als ein Typ-2 Hypervisor ausgestaltet. Ein solcher Typ-2 Hypervisor wird innerhalb eines vollwertigen Hauptbetriebssystems integriert, welches die letztliche Zuteilung der Betriebsmittel, wie beispielsweise CPU etc. übernimmt, die von der virtuellen Maschine angefragt werden. Der Hypervisor 5 kontrolliert von dort ausgehend die virtuelle Maschine. Bekannte Vertreter sind VMware Workstation, VirtualBox oder Linux Kernel-based Virtual Maschine (KVM).

Der Hypervisor 5 installiert die virtuelle Maschine mit einem zweiten Betriebssystem 6 auf der Hardwareebene 2. Dabei werden auf dem ersten Betriebssystem 3 erste Anwendungen 4 und auf dem zweiten Betriebssystem 6 zweite Anwendungen 7 ausgeführt, wobei die ersten, sicherheitskritischen Anwendungen 4 einen höheren Sicherheitsstandard als die zweiten, unkritischen Anwendungen 7 aufweisen. Die zweiten, unkritischen Anwendungen 7 können dabei einem Fahrzeug-Infotainmentsystem zugeordnet werden.
Dies bedeutet, dass sowohl die ersten, sicherheitsrelevanten Anwendungen 4 als auch die nicht kritischen zweiten Anwendungen 7 auf einer Hardwareebene 2 mit einem gemeinsamen Speicher ausgeführt werden.
Die Hardwareebene 2 ist bevorzugt als Ein-Chip-System (SoC) mit Multicore-Prozessor, also einem High-Performance Multicore System ausgebildet.

Dabei ist das zweite Betriebssystem 6 dazu ausgebildet ist, im Suspend-to-RAM-Betrieb betrieben zu werden, während das erste Betriebssystem 3 ausgeschaltet ist.

Anstelle das gesamte Fahrzeugsystem 1 in den Suspend-to-RAM-Betrieb zu versetzen, wird das Fahrzeugsystem 1 mittels des Hypervisors 5 so partitioniert, dass nur ein zweiter Teil 9 des Fahrzeugsystem 1, welcher das zweite Betriebssystem 6 mit den unkritischen Anwendungen 7 umfasst, in den Suspend-to-RAM-Betrieb versetzt wird. Ein erster 8 Teil des Fahrzeugsystems 1, welcher das erste Betriebssystem 3 mit den ersten, sicherheitsrelevanten Anwendungen 4 und dem Hypervisor 5 umfasst, wird neu gestartet.

Somit ist ein sicheres als auch schnelles Aufstarten des gesamten erfindungsgemäßen Fahrzeugsystems 1 möglich.

Somit wird die Robustheit der ersten, sicherheitsrelevanten Anwendungen 4 und eine schnelle Verfügbarkeit der zweiten Anwendungen 7 gewährleistet. Die zweiten Anwendungen 7 des zweiten Betriebssystems 6, wie beispielsweise die Infotainment-Funktionen, sind nicht kritisch. Alle Betriebssysteme, das heißt das erste Betriebssystem 3 als auch das zweite Betriebssystem 6 sind mit ihren Anwendungen 4,7 in dem erfindungsgemäßen Fahrzeugsystem 1 schnell verfügbar.

FIG 6 zeigt eine weiteres erfindungsgemäßes Fahrzeugsystem 10. Dieses umfasst ebenfalls die Hardwareebene 2. Ferner ist auf der Hardwareebene 2 ein Hypervisor 12 aufgesetzt. Der Hypervisor 12 ist als ein Typ-1 oder Typ-0 Hypervisor ausgestaltet. Ein Typ-1 Hypervisor ist direkt auf der Hardware integriert und benötigt kein vollwertiges oder gar kein Betriebssystem. Virtuelle Maschinen sowie deren Zuteilung der Ressourcen (Betriebsmittel, beispielsweise Arbeitsspeicher) werden dynamisch von einem minimalen Betriebssystem oder gar keinem Betriebssystem unterstützt. Vertreter sind u.a. Microsoft Hyper-V oder der Citrix XenServer, oder für eingebettete Systeme Sysgos PikeOS, Green Hills Integrity, Freescales Topaz.

Der Hypervisor 12 installiert eine erste virtuelle Maschine mit dem ersten Betriebssystem 3. Das erste Betriebssystem 3 kann wie oben beschrieben als ein zertifizierbares, echtzeitfähiges schnell bootendes, Automotive Safety Integrity Level (ASIL) erstes Betriebssystem 3 ausgestaltet sein. Auf dem ersten Betriebssystem 3 werden erste, sicherheitskritische Anwendungen 4 ausgeführt. Der Hypervisor 12 installiert eine zweite virtuelle Maschine mit dem zweiten Betriebssystem 6. Auf diesem werden zweite, unkritische Anwendungen 7 ausgeführt.

Anstelle das gesamte Fahrzeugsystem 10 in den Suspend-to-RAM-Betrieb zu versetzen, wird das Fahrzeugsystem 10 mittels des Hypervisors 12 so partitioniert, dass nur ein zweiter Teil 18 des Fahrzeugsystems 10, welcher die zweite virtuelle Maschine umfasst, in den Suspend-to-RAM-Betrieb versetzt wird. Ein erster Teil 17 des Fahrzeugsystems 10, welcher das erste Betriebssystem 3 mit den sicherheitsrelevanten Anwendungen 7 und dem Hypervisor 12 umfasst, wird neu gestartet.

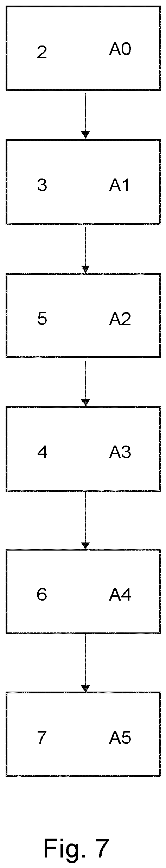

FIG 7 zeigt einen erfindungsgemäßen Aufstartvorgang für das erfindungsgemäße Fahrzeugsystem 1 (FIG 5). Hier wird in einem Schritt A0 die Hardwareebene 2 (FIG 5) bereitgestellt.

Zunächst wird der erste Teil 8 (FIG 5) des Fahrzeugsystems 1 (FIG 5) durch einen sogenannten cold boot neu gestartet. Beim cold boot wird ein Fahrzeugsystem aus einem ausgeschalteten Zustand gestartet und in den normalen Betriebszustand versetzt.

Dazu wird in einem Schritt A1 zunächst das erste Betriebssystem 3 (FIG 5) neu gestartet.

In einem Schritt A2 wird anschließend der Hypervisor 5 (FIG 5) neu gestartet, welcher eine virtuelle Maschine auf der Hardwareebene 2 (FIG 5) einrichtet.

In einem Schritt A3 werden anschließend die sicherheitskritischen Anwendungen 4 (FIG 5) neu gestartet.

Anschließend wird der zweite Teil 9 des Fahrzeugsystems 1 (FIG 5) durch einen sogenannten warm boot gestartet. Herbei werden die Funktionen/Anwendungen aus dem Suspend-to-RAM-Betrieb geholt.

In einem Schritt A4 wird dazu zunächst das zweite Betriebssystem 6 aus dem Suspend-to-RAM-Betrieb geholt.

In einem weiteren Schritt A5 werden anschließend die unkritischen Anwendungen 7 gestartet und auf dem zweiten Betriebssystem 6 ausgeführt.

Die Erfindung ist auf allen Gebieten einsetzbar, wo sicherheitsrelevante und nicht sicherheitsrelevante Anwendungen in einer Hypervisor-Umgebung ausgeführt werden.

### Bezugszeichenliste:

- 100: Fahrzeugsystem gemäß dem Stand der Technik
- 101: Hardwareebene des Fahrzeugsystems 100
- 102: erstes Betriebssystem des Fahrzeugsystems 100
- 111: zweite Hardwareebene des Fahrzeugsystems 100
- 112: zweiten Betriebssystem des Fahrzeugsystems 100
- 103: erste Anwendungen des Fahrzeugsystems 100
- 113: zweite Anwendungen des Fahrzeugsystems 100
- 200: Fahrzeugsystem 200 gemäß dem Stand der Technik
- 201: Hardwareebene 201 des Fahrzeugsystems 200
- 202: Hypervisor des Fahrzeugsystems 200
- 300: Fahrzeugsystem gemäß dem Stand der Technik
- 301: Hypervisor des Fahrzeugsystems 300

- 1: Fahrzeugsystem
- 2: Hardwareebene
- 3: ein erstes Betriebssystem
- 4: sicherheitskritische Anwendungen
- 5: Hypervisor
- 6: zweiten Betriebssystem
- 7: zweiten, unkritischen Anwendungen
- 8: erster Teil
- 9: zweiter Teil
- 10: erfindungsgemäßes zweites Fahrzeugsystem
- 12: Hypervisor
- 17: erster Teil
- 18: ein zweiter Teil
- S,A: Verfahrensschritte

## Patentansprüche

1. Fahrzeugsystem (1,10) umfassend:
eine Hardwareebene (2),
ein erstes Betriebssystem (3),
eine virtuelle Maschine mit einem zweiten Betriebssystem (6), wobei die virtuelle Maschine auf der Hardwareebene (2) integriert ist,
einen Hypervisor (5,12), der dazu ausgebildet ist, die virtuelle Maschine auf der Hardwareebene (2) zu betreiben, so dass das erste Betriebssystem (4) und das zweite Betriebssystem (6) parallel auf der Hardwareebene (2) betreibbar sind,
**dadurch gekennzeichnet, dass**
auf dem ersten Betriebssystem (3) zumindest eine erste Anwendung (4) und auf dem zweiten Betriebssystem (6) zumindest eine zweite Anwendung (7) ausführbar sind,
wobei die zumindest eine erste Anwendung (4) einen höheren Sicherheitsstandard als die zumindest eine zweite Anwendung (7) aufweist,
wobei das zweite Betriebssystem (6) dazu konfiguriert ist, im Suspend-to-RAM-Betrieb betrieben zu werden, während das erste Betriebssystem (3) ausgeschaltet ist.

2. Fahrzeugsystem (1,10) nach Anspruch 1,
**dadurch gekennzeichnet, dass** bei Inbetriebnahme des Fahrzeugsystems (1,10) ein Neustart des ersten Betriebssystems (3) und ein Aufstart des zweiten Betriebssystems (6) aus dem Suspend-to-RAM-Betrieb bewerkstelligbar ist.

3. Fahrzeugsystem (1,10) nach Anspruch 1 oder 2,
**dadurch gekennzeichnet, dass** die zumindest eine erste Anwendung (4) und die zumindest eine zweite Anwendung (7) umfasst sind, wobei die zumindest eine erste Anwendung (4) ausgeschaltet ist, während die zumindest eine zweite Anwendung (7) im Suspend-to-RAM-Betrieb ist.

4. Fahrzeugsystem (1,10) nach Anspruch 3, **dadurch gekennzeichnet, dass** bei Inbetriebnahme des Fahrzeugsystems (1,10) ein Neustart der zumindest einen ersten Anwendung (4) und ein Aufstart der zumindest zweiten Anwendung (7) aus dem Suspend-to-RAM-Betrieb bewerkstelligbar ist.

5. Fahrzeugsystem (1,10) nach einem der vorhergehenden Ansprüche,
**dadurch gekennzeichnet, dass** der Hypervisor (5,12) bei Außerbetriebnahme des Fahrzeugsystems (1,10) dazu konfiguriert ist, abgeschaltet zu werden und bei Inbetriebnahme des Fahrzeugsystems (1,10) dazu konfiguriert ist, neu gestartet zu werden.

6. Fahrzeugsystem (1,10) nach einem der vorhergehenden Ansprüche,
**dadurch gekennzeichnet, dass** das erste Betriebssystem (3) einen höheren Sicherheitsstandard aufweist als das zweite Betriebssystem (6).

7. Fahrzeugsystem (1,10) nach einem der vorhergehenden Ansprüche,
**dadurch gekennzeichnet, dass** die Hardwareebene (2) als ein System-on-Chip ausgebildet ist.

8. Fahrzeugsystem (1,10) nach einem der vorhergehenden Ansprüche,
**dadurch gekennzeichnet, dass** die Hardwareebene (2) Betriebsmittel aufweist, wobei der Hypervisor (5,12) dazu konfiguriert ist, die Betriebsmittel auf das erste Betriebssystem (3) und zweite Betriebssystem (6) derart aufzuteilen, dass das erste Betriebssystem (3) und zweite Betriebssystem (6) unabhängig voneinander betreibbar sind.

9. Fahrzeugsystem (1,10) nach Anspruch 8,
**dadurch gekennzeichnet, dass** der Hypervisor (5,12) dazu konfiguriert ist, eine Partitionierung von zumindest einem der Betriebsmittel zu bewerkstelligen, indem der Hypervisor (5,12) einen ersten Teilbereich des zumindest einen Betriebsmittels dem ersten Betriebssystem (3) und einen zweiten Teilbereich des zumindest einen Betriebsmittels dem zweiten Betriebssystem (6) zuweist.

10. Fahrzeugsystem (1,10) nach einem der vorhergehenden Ansprüche, **dadurch gekennzeichnet, dass** der Hypervisor (5,12) dazu konfiguriert ist, die zumindest eine erste Anwendung (4) und die zumindest eine zweite Anwendungen (7) in einer ersten und zweiten Betriebssystem-Partition auf der Hardwareebene (2) bereitzustellen.

11. Fahrzeugsystem (10) nach einem der vorhergehenden Ansprüche, umfassend
eine erste virtuelle Maschine mit dem ersten Betriebssystem (3) und
eine zweite virtuelle Maschine mit dem zweiten Betriebssystem (6), wobei die erste virtuelle Maschine und die zweite virtuelle Maschine auf der Hardwareebene (2) integriert sind, so dass die erste virtuelle Maschine und die zweite virtuelle Maschine parallel auf der Hardwareebene (2) betreibbar sind,
wobei auf dem ersten Betriebssystem (3) zumindest die eine erste Anwendung (4) und auf dem zweiten Betriebssystem (6) zumindest die eine zweite Anwendung (7) ausführbar sind, wobei die zumindest eine erste Anwendung einen höheren Sicherheitsstandard als die zumindest eine zweite Anwendung aufweist,
einen Hypervisor (12), der dazu ausgebildet ist, die erste virtuelle Maschine und die zweite virtuelle Maschine auf der Hardwareebene (2) zu betreiben,
wobei die zweite virtuelle Maschine dazu ausgebildet ist, im Suspend-to-RAM-Betrieb betrieben zu werden, während die erste virtuelle Maschine ausgeschaltet ist.

12. Fahrzeugsystem (10) nach Anspruch 11,
**dadurch gekennzeichnet, dass** die Hardwareebene (2) zumindest ein Betriebsmittel umfasst, wobei der Hypervisor (12) dazu konfiguriert ist, eine Partitionierung von zumindest einem der Betriebsmittel zu bewerkstelligen, indem der Hypervisor (12) einen ersten Teilbereich des zumindest einen Betriebsmittels der ersten virtuellen Maschine und einen zweiten Teilbereich des zumindest einen Betriebsmittels der zweiten virtuellen Maschine zuweist.

13. Fahrzeugsystem (10) nach einem der vorhergehenden Ansprüche 11 bis 12,
**dadurch gekennzeichnet, dass** bei Inbetriebnahme des Fahrzeugsystems (10) ein Neustart des ersten Betriebssystems (3) der ersten virtuellen Maschine und ein Aufstart des zweiten Betriebssystems (6) der zweiten virtuellen Maschine aus dem Suspend-to-RAM-Betrieb bewerkstelligbar ist.

14. Fahrzeug, welches ein Fahrzeugsystem (1,10) nach einem der vorhergehenden Ansprüche 1 bis 13 aufweist.

15. Fahrzeug nach Anspruch 14, **dadurch gekennzeichnet, dass** das Fahrzeugsystem (1,10) zumindest eine Komponente aufweist, wobei das Fahrzeugsystem (1,10) eine Schnittstelle zur Kommunikation des Fahrzeugsystems (1,10) mit der zumindest einen Komponente aufweist.

16. Verfahren zum Betreiben eines Fahrzeugsystems (1,10) **gekennzeichnet durch** die Schritte:
- Bereitstellen eines ersten Betriebssystems (3) auf einer Hardwareebene (2),
- Bereitstellen eines Hypervisors (5,12) auf der Hardwareebene (2),
- Bereitstellen einer virtuellen Maschine mit einem zweiten Betriebssystem (6) durch den Hypervisor (5,12), so dass das erste Betriebssystem (3) und das zweite Betriebssystem (6) parallel auf der Hardwareebene (2) betreibbar sind, wobei auf dem ersten Betriebssystem (3) zumindest eine erste Anwendung (4) und auf dem zweiten Betriebssystem (6) zumindest eine zweite Anwendung (7) ausführbar ist, wobei die zumindest eine erste Anwendung (4) einen höheren Sicherheitsstandard als die zumindest eine zweite Anwendung (7) aufweist,
- Betreiben des zweiten Betriebssystems (6) im Suspend-to-RAM-Betrieb, während das erste Betriebssystem (3) ausgeschaltet ist.

17. Verfahren nach Anspruch 16, **gekennzeichnet durch** die Schritte:
- Bereitstellen eines Hypervisors (12) auf der Hardwareebene (2),
- Bereitstellen einer ersten virtuellen Maschine mit dem ersten Betriebssystem (3) durch den Hypervisor (12),
- Bereitstellen einer zweiten virtuellen Maschine mit dem zweiten Betriebssystem (6) durch den Hypervisor (12), so dass die erste virtuelle Maschine und die zweite virtuelle Maschine parallel auf der Hardwareebene (2) betreibbar sind, wobei auf dem ersten Betriebssystem (3) zumindest die eine erste Anwendung (4) und auf dem zweiten Betriebssystem (6) zumindest die eine zweite Anwendung (7) ausführbar sind, wobei die zumindest eine erste Anwendung (4) einen höheren Sicherheitsstandard als die zumindest eine zweite Anwendung (7) aufweist,
- Betreiben der zweiten virtuellen Maschine im Suspend-to-RAM-Betrieb, während die erste virtuelle Maschine ausgeschaltet ist.

18. Verfahren nach Anspruch 16 oder 17, **gekennzeichnet durch** die Schritte:
- Bereitstellen eines Fahrzeugsystems (1,10) im Betrieb,
- Versetzten des zweiten Betriebssystems (6) in den Suspend-to-RAM-Betrieb und herunterfahren des ersten Betriebssystems (4).

19. Verfahren nach Anspruch 18, **gekennzeichnet durch** die Schritte:
- Bereitstellen des ersten Betriebssystems (3) im ausgeschalteten Zustand,
- Bereitstellen des zweiten Betriebssystems (6) im Suspend-to-RAM-Betrieb,
- Starten des ersten Betriebssystems (3) durch einen Neustart bei Inbetriebnahme des Fahrzeugsystems (1,10),
- Starten des zweiten Betriebssystems (6) aus dem Suspend-to-RAM-Betrieb bei Inbetriebnahme des Fahrzeugsystems (1,10).

20. Verfahren nach einem der Ansprüche 16 bis 19, **gekennzeichnet durch** die Schritte:
- Bereitstellen eines Fahrzeugsystems (1,10) im Betrieb,
- versetzten der zumindest einen zweiten Anwendung (7) in den Suspend-to-RAM-Betrieb und herunterfahren der zumindest einen ersten Anwendung (4).

21. Computerprogramm, umfassend Befehle, die bewirken, dass das Fahrzeugsystem (1,10) nach einem der vorhergehenden Ansprüche 1 bis 13, die Verfahrensschritte nach einem der vorhergehenden Ansprüche 16 bis 20 ausführt.
